# EUROPEAN PATENT SPECIFICATION

(11) **EP 0 579 574 B1**
(45) Date of publication and mention of the grant of the patent: **25.09.1996**
(21) Application number: 93630049.0
(22) Date of filing: 15.07.1993
(51) Int. Cl.: H01M 4/38

(54) **A novel active material of hydrogen storage alloy electrode**
Neues aktives Material von einer Elektrode aus Wasserstoffspeicherlegierung
Nouveau matériau actif d'une électrode emmagasinant l'hydrogène

(30) Priority: 16.07.1992 CN 92104667
(43) Date of publication of application: 19.01.1994
(73) Proprietor: NANKAI UNIVERSITY, Nankai Qu, Tianjin, P.R. (CN)
(72) Inventor: Zhang, Yunshi, Nankai University (CN); Song, Deying, Nankai University (CN); Chen, jun, Nankai University (CN); Yuan, Huatang, Nankai University (CN); Chen, Youxiao 608-Second Building, Tianjin (CN); Wang, Genshi, Nankai University (CN); Cao, Xuejun, Nankai University (CN); Jin, Yufeng, Nankai University (CN); Zhou, Zuoxiang 12-2 Dong, Nankai University (CN)
(74) Representative: Schmitz, Jean-Marie

(56) References cited:
- EP-A- 0 197 680
- EP-A- 0 293 660
- EP-A- 0 477 461

## Description

### Background

This inventions relates to a hydrogen storage alloy electrode, particularly to a novel active material of hydrogen storage alloy electrode.

The study of hydrogen storage alloy of rare-earth system was first initiated with LaNi₅ alloy. As the crystal lattice of LaNi₅ alloy expands dramatically during the charge-discharge of hydrogen process, the alloy loses its capacity of hydrogen storing due to its pulverization and oxidation resulted from the expansion. Over the past twenty years, people have been seeking for a novel active material for hydrogen storage alloy electrodes. The ideal material for hydrogen storage alloy electrodes should have (1) a greater effective electrochemical capacity, (2) an appropriate equilibrium decomposition pressure of hydrogen, (3) a prolonged life of charge-discharge, (4) better corrosion resistance, (5) excellent property of electrocatalysis and (6) raw materials that are of a low price. In order to obtain the material described above, constant efforts have been made to improve the composite structure of the materials for hydrogen storage alloy electrodes, such as adding Mn in LaNi₅ alloy to reduce the plateau pressure, adding Al to increase the corrosion resistance of the alloy and adding Co to reduce the expansion of the crystal lattice. The life of hydrogen storage alloy electrodes is prolonged by the addition of Mn, Al and Co. The life cycle of charge-discharge has been increased from less then twenty cycles in a LaNi₅ electrode to about hundred cycles in an alloy electrode with the five members. (JP01231268; J. Materials Science, 1983, 18, 321-24; Progress in Batteries & Solar Cells, 1989, 8). However, up to now, materials for hydrogen storage alloy electrodes have not been reported in any literature with which a secondary battery has met the IEC standard with a life of up to 500 cycles. Although the addition of Co prolongs the life of the electrode materials, it is far from reaching the IEC standard. Futher, Co is a very expensive raw material.

### Summary of the Invention

One of the objects of this invention is to provide a novel active material for hydrogen storage alloy electrodes, wherein Co is replaced by Zn. After treatment of the surface of such Zn-containing material, it not only achieves and exceeds the IEC standard, but also significantly reduces the costs of the raw materials and the production of electrodes.

Another object of this invention is to provide a novel hydrogen storage alloy electrode with a Zn-Containing active material.

According to the present invention, an active material of hydrogen storage alloy electrode, comprising an alloy base with a formula:

MmNi_{5-x-y-z}ZnₓQ_{y}R_{z},

and a Ni-P metallic compound,
wherein Mm is a mischmetal; Q is Al, Ca or Sr; R is Li, Na or K: 0<x≤1, 0<y≤0.8, 0<z≤1, and the Ni-P metallic compound is coated on the alloy base.

### Detailed Description of the Invention

According to the present invention, a novel active material of hydrogen stroage alloy electrode comprises a chemical composition with a general formula,

MmNi_{5-x-y-z}ZnₓQ_{y}R_{z},

wherein 0<x≤1, 0<y≤0.8 and 0<z≤1. Mm is a mischmetal or a lanthanumrich mischmetal. It is preferred that Mm is free from heavy rare-earth elements.

In the active material Q is Al, Ca or Sr. Q is a component most of which is dispersed at the crystal boundary, interface of the phases and the defects of the alloy when the amount of Q is larger than the solid solubility of a LaNi₅ alloy. Because Q is very ease to be oxidized the formed oxides may be deposited at the crystal boundary, interface of the phases and the defects of the alloy. These oxides serve as excellent propective films against further oxidation, which gives the alloy a good corrosion resistance.

In the formula, R is Li, Na or K. R may increase the activity of the alloy which in turn increases the electro-chemical capacity of the hydrogen storage alloy electrode.

According to the present invention, the powdery alloy with the formula, is further coated with a Nickel and Phosphorous (Ni-P) metallic compound. The atomic percentage of the metallic compound is from 93 to 97% of Ni and from 3 to 7% of P.

It is preferred according to the invention that Q is Al, and R is Li in the active material.

It is also preferred that x is from 0.5 to 0.8, y is from 0.2 to 0.5, and z is from 0.05 to 0.2.

The active material of hydrogen storage alloy electrode is prepared by mixing all five components of the formula in a predetermined ratio, melting the resulting mixture to form a cast ingot of the alloy, grinding the ingot of the alloy to give powder of the alloy in size of 250 to 600 mesh, preferably 300 to 400 mesh, and coating the powdery alloy with a Ni-P metallic compound to the thickness of 1 to 4 µm, preferably, 2 to 3 µm by a conventional chemical plating method.

During the above-mentioned coating process, because Ni is a typical face-centered cubic structure, it forms an intergated film after being deposited on the surface of the alloy base. During the above-mentioned coating process, Zn is diffused towards the surface of the alloy and forms a metallic compound with Ni chemically deposited on the surface of the alloy. Therefore the alloy base is connected to the surface coating via Zn to forman alloy phase. As a result, the surface Ni-P metallic compound is firmly connected with the alloy base. Thus, not only the loss of effectiveness of hydrogen storage alloy caused by the expansion of crystal lattice during the process for the charge-discharge of hydrogen can be reduced, as it happened with Co, but also the film so formed has an excellent electric and heat conductivity, good plastic deformation resistance and corrosion resistance.

A hydrogen storage alloy electrode is prepared with a general method by using the coated alloy of the invention as an active material of the hydrogen storage alloy. The hydrogen storage alloy electrode shows an increased electric chemical capacity, a prolonged cycle life. The capacity of the battery assembled with the electrode reduces only by about 6 percent after 500 of charge-discharge cycles, which is far below the IEC standard.

In accordance with invention, an alkali battery includes a hydrogen storage alloy electrode which incorporates the active material of the invention.

### Example 1

An alloy material of MmNi₄Zn_{0.5}Al_{0.3}Li_{0.2} obtained from a vaccum induction furnace was pulverized into an alloy powder of 300-400 mesh by a vibration mill. The powdery alloy was coated with a Ni-P metallic compound in 2-3µm on its surface by a conventional chemical plating method. The atomic percentage of the metallic compound used was 95% of Ni and 5% of P.

After coating, the powdery alloy was dried in vaccum at 80-100°C, and kept at this temperature for 18 hours. Then the temperature was raised to 150°C. The powdery alloy was subjected to diffusion annealing for 15 hours at this temperature. 6.5g of the surface-coated powdery alloy was then mixed with 2% by weight of PVA (Polyvinyl Acetate) in ratio of 85:15 to form a paste. An anode of 8.5x4cm was made by applying the paste to a foam nickel plate with thickness of 1mm. A measurement was made of the electrochemical capacity of the anode with nickel oxide as a cathode, nonwoven nylon as a separator, and Hg/HgO as reference electrode. The results are shown in Table 1.

### Eample 2

An anode with an active material of MmNi_{3.8}Zn_{0.7}Al_{0.3}Li_{0.2} was made by a process as described in Example 1.

An A-A type 5# battery was assembled with nickel oxide as cathode. The electrochemical capacity measured is shown in Table 2.

**Table 1**

| The Electrochemical Capacity of Novel Zn-Containing Material of Hydrogen Storage Alloy Electrode (mAh/g) | | |
|---|---|---|
| Discharge | MmNi₄Zn_{0.5}Al_{0.3}Li_{0.2} | MmNi_{3.8}Co_{0.5}Mn_{0.5}Al_{0.2} |
| Multiple Rate | Capacity | Capacity |
| 0.2C | 288 | 284 |
| 1C | 262 | 259 |
| 3C | 210 | 208 |

**Table 2**

| Comparison of Electrochemical Capacity of A-A type Battery of Two Kind of Alloy Materials | | |
|---|---|---|
| Discharge | MmNi_{3.8}Zn_{0.7}Al_{0.3}Li_{0.2} | MmNi_{3.8}Co_{0.5}Mn_{0.5}Al_{0.2} |
| Multiple Rate | Capacity(mAh) | Capacity(mAh) |
| 0.2C | 1180 | 1100 |
| 1C | 1060 | 1060 |
| 3C | 1002 | 940 |
| 5C | 948 | 906 |

## Claims

1. An active material of hydrogen storage alloy electrode, comprising an alloy base with a formula:
Mm Ni_{5-x-y-z}ZnₓQ_{y}R_{z},
and a Ni-P metallic compound,
wherein Mm is a mischmetal; Q is Al, Ca or Sr; R is Li, Na or K; 0<x≤1 , 0<y≤0.8, 0<z≤1, and the Ni-P metallic compound is coated on the alloy base.

2. An active material according to claim 1, wherein the atomic percentage of the Ni-P metallic compound is from 93 to 97% of Ni, and from 3 to 7% of P.

3. An active material according to claim 1, wherein Q ia Al.

4. An active material according to claim 1, wherein R is Li.

5. An active material according to claim 1 or 2, wherein x is from 0.5 to 0.8, y is from 0.2 to 0.5, and z is from 0.2 to 0.05.

6. An active material according to claim 1 or 2, wherein Q is Al, R is Li, x is from 0.5 to 0.8, y is from 0.2 to 0.5 and z is from 0.05 to 0.2.

## Patentansprüche

1. Aktives Material für eine Elektrode aus Wasserstoffspeicherlegierung, das eine Legierungsgrundlage umfaßt, mit der Formel:
Mm Ni_{5-x-y-z} Znₓ Q_{y} R_{z} ,
und eine Ni-P Metallverbindung,
wobei Mm ein Mischmetall ist; Q für Al, Ca oder Sr steht; R für Li, Na oder K steht; 0<x≤1, 0<y≤0.8, 0<z≤1, und die Ni-P Metallverbindung auf der Legierungsgrundlage beschichtet wird.

2. Aktives Material nach Anspruch 1, wobei der atomare Prozentgehalt der Ni-P Metallverbindung von 93 bis 97 % aus Ni und von 3 bis 7 % aus P besteht.

3. Aktives Material nach Anspruch 1, wobei Q für Al steht.

4. Aktives Material nach Anspruch 1, wobei R für Li steht.

5. Aktives Material nach Anspruch 1 oder 2, wobei x sich von 0,5 bis 0,8, y sich von 0,2 bis 0,5 und z sich von 0,2 bis 0,05 erstreckt.

6. Aktives Material nach Anspruch 1 oder 2, wobei Q für Al steht, R für Li steht, x sich von 0,5 bis 0,8 und y sich von 0,2 bis 0,5 und z sich von 0,05 bis 0,2 erstreckt.

## Revendications

1. Une matière active d'une électrode en alliage emmagasinant l'hydrogène, comprenant une base d'alliage ayant la formule:
Mm Ni_{5-x-y-z}ZnₓQ_{y}R_{z},
et un composé métallique Ni-P,
dans laquelle Mm est un mischmétal; Q est Al, Ca ou Sr; R est Li, Na ou K; 0<x≤1, 0<y≤0,8, 0<z≤1, et le composé métallique Ni-P est enduit sur l'alliage de base.

2. Une matière active selon la revendication 1, dans laquelle le pourcentage atomique du composé métallique Ni-P est de 93 à 97 % de Ni, et de 3 à 7 % de P.

3. Une matière active selon la revendication 1, dans laquelle Q est Al.

4. Une matière active selon la revendication 1, dans laquelle R est Li.

5. Une matière active selon la revendication 1 ou 2, dans laquelle x est de 0,5 à 0,8, y est de 0,2 à 0,5, et z est de 0,2 à 0,05.

6. Une matière active selon la revendication 1 ou 2, dans laquelle Q est Al, R est Li, x est de 0,5 à 0,8, y est de 0,2 à 0,5 et z est de 0,05 à 0,2.
